(19) Europäisches Patentamt
European Patent Office
Office européen des brevets

(11) Veröffentlichungsnummer: **0 250 364 B1**

(12) **EUROPÄISCHE PATENTSCHRIFT**

(45) Veröffentlichungstag der Patentschrift: **23.10.91**

(51) Int. Cl.⁵: **C08G 18/22**, C09D 175/04

(21) Anmeldenummer: **87810335.7**

(22) Anmeldetag: **11.06.87**

Die Akte enthält technische Angaben, die nach dem Eingang der Anmeldung eingereicht wurden und die nicht in dieser Patentschrift enthalten sind.

# (54) Verfahren zur Härtung von Polyurethanlacken.

(30) Priorität: **17.06.86 CH 2436/86**

(43) Veröffentlichungstag der Anmeldung:
**23.12.87 Patentblatt 87/52**

(45) Bekanntmachung des Hinweises auf die Patenterteilung:
**23.10.91 Patentblatt 91/43**

(84) Benannte Vertragsstaaten:
**DE FR GB IT**

(56) Entgegenhaltungen:
**EP-A- 0 094 915**
**DE-C- 977 979**

(73) Patentinhaber: **CIBA-GEIGY AG**
**Klybeckstrasse 141**
**CH-4002 Basel(CH)**

(72) Erfinder: **Berner, Godwin, Dr.**
**Sommerhalde 5**
**CH-4102 Binningen(CH)**
Erfinder: **Rembold, Manfred, Dr.**
**Im Aeschfeld 21**
**CH-4147 Aesch(CH)**
Erfinder: **Sitek, Franciszek, Dr.**
**Grossmattweg 11**
**CH-4106 Therwil(CH)**
Erfinder: **Rutsch, Werner, Dr.**
**Avenue Weck-Reynold 1**
**CH-1700 Fribourg(CH)**

**EP 0 250 364 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft ein Verfahren zur Härtung von 2-Komponenten-Polyurethanlacken unter Zusatz eines latenten Katalysators aus der Klasse bestimmter Aren-Eisen(II)-Verbindungen.

Die in der Lackindustrie üblichen Polyurethanlacke sind vorwiegend Zweikomponentenlacke, die durch Reaktion einer Polyhydroxylverbindung mit einem Polyisocyanat gehärtet werden. Als Polyhydroxylverbindung werden z.B. Polyetherpolyole, Polyesterpolyole oder Hydroxyalkylester von Polyacrylaten verwendet. Als Polyisocyanate werden vorzugsweise Di- und Triisocyanate verwendet. Die beiden Komponenten werden in annähernd äquimolarem Verhältnis der OH-Gruppen und NCO-Gruppen verwendet. Die Reaktion erfolgt bei Raumtemperatur relativ langsam, man beschleunigt daher bei der industriellen Lackierung die Reaktion meist durch Temperaturerhöhung oder durch Zusatz von Katalysatoren oder durch beide Massnahmen. Als Katalysatoren werden hauptsächlich tertiäre Amine oder metallorganische Verbindungen wie z.B. Dibutylzinn-dilaurat verwendet. Im DE-C-977 979 wurde auch schon Ferrocen als Katalysator für die Härtung von Raketentreibsätzen auf Polyurethanbasis beschrieben. Für Polyurethanlacke eignet sich Ferrocen jedoch kaum, da dieser Katalysator relativ langsam härtet und zur Schrumpfung der Lackoberfläche neigt.

Sobald beide Komponenten und der Katalysator vermischt sind, beginnt die Reaktion der beiden Komponenten und damit die Härtung des Lackes. Man hat dann für die Applikation nur eine kurze Topfzeit zur Verfügung.

Es wurde nunmehr gefunden, dass dieses Problem dadurch gelöst werden kann, dass man einen blockierten Katalysator verwendet, der nach der Applikation entweder thermisch oder mit aktinischem Licht aktiviert werden kann. Die Aktivierung des Katalysators mit aktinischem Licht geschieht dabei vorzugsweise durch Licht von der Wellenlänge 200-600 nm. Als derart aktivierbare latente Katalysatoren lassen sich bestimmte Typen von Aren-Cyclopentadienyl- oder Aren-Indenyl-Eisen(II)-Salzen verwenden.

Die Erfindung betrifft daher ein Verfahren zur Härtung von Polyurethanlacken, die aus mindestens einer Polyhydroxylverbindung und mindestens einem Polyisocyanat oder einem blockierten Polyisocyanat bestehen, und ist dadurch gekennzeichnet, dass man dem Lack vor der Applikation als latenten Härtungskatalysator eine Verbindung der Formel I zusetzt,

$$\left[ (R^1)\ Fe^{II}(R^2) \right]_a^+ \quad [X]^{a-} \qquad I$$

worin a 1, 2 oder 3 ist, $R^1$ ein ungeladener carbocyclischer oder heterocyclischer, unsubstituierter oder substituierter aromatischer Ring ist, $R^2$ ein unsubstituiertes oder substituiertes Cyclopentadienyl- oder Indenyl-Anion ist und $[X]^{a-}$ ein a-wertiges Anion ist und den Lack nach der Applikation erwärmt oder mit aktinischem Licht bestrahlt und anschliessend erwärmt. Bevorzugt wird der Lack erst bestrahlt und dann auf 50-150 °C erwärmt.

$R^1$ ist ein ungeladenes $\pi$-Aren und kann ein heterocyclisches oder carbocyclisches Aren sein. Vorzugsweise ist $R^1$ ein carbocyclisches Aren. Beispiele für heterocyclische Arene und deren Substitutionsprodukte sind 5- oder 6-gliedrige O-, H- und/oder S-Atome enthaltende Heteroaromaten und deren Anellierungsderivate und Alkylderivate, wie z.B. Thiophen, Chromen, Xanthen, Thioxanthen, Benzothiophen, Naphthothiophen, Thiantren, Diphenylenoxid, Diphenylensulfid, Methylxanthen, Isopropylthioxanthen, 3-Methylbenzothiophen, Pyridin, Chinolin, Chinaldin, Isochinolin, Carbazol, N-Methylcarbazol, Acridin, Phenazin oder N-Ethylphenthiazin. Beispiele für unsubstituierte carbocyclische Arene sind vor allem Benzol, Naphthalin, Inden, Fluoren, Pyren, Phenanthren, Anthracen, 9,10-Dihydroanthracen, Tetrahydronaphthalin, Naphthacen, Coronen, Biphenylen oder Triphenylen. Beispiele für substituierte carbocyclische Arene sind vor allem durch $C_1$-$C_{14}$-Alkyl, Halogen, Phenyl, $C_1$-$C_{10}$-Alkoxy, Cyan, $C_7$-$C_{12}$-Alkylphenyl, $C_7$-$C_{11}$-Phenylalkyl, $C_8$-$C_{18}$-Alkylphenylalkyl, $C_2$-$C_{13}$-Alkoxycarbonyl, Phenoxy, Phenylthio, Phenoxycarbonyl, Styryl, $C_1$-$C_4$-Alkylstyryl oder $C_1$-$C_4$-Alkoxy-styryl substituiertes Benzol, Naphthalin oder Anthracen. Beispiele hierfür sind Toluol, Xylol, Ethylbenzol, Cumol, tert.Butylbenzol, Methylnaphthalin, Methoxybenzol, Ethoxybenzol, Dimethoxybenzol, Chlorbenzol, Brombenzol, Dichlorbenzol, Chlornaphthalin, Bromnaphthalin, Benzonitril, Benzoesäure-methyl- oder -dodecylester, Diphenylether, Diphenylsulfid, Stilben, 4,4'-Dimethylstilben, 4,4'-Dimethoxystilben, 9-Benzylanthracen oder 9-(4-Butylbenzyl)anthracen.

Bevorzugt ist $R^1$ Benzol, Toluol, Xylol, Cumol, Methoxybenzol, Chlorbenzol, 4-Chlortoluol, Naphthalin, Methylnaphthalin, Chlornaphthalin, Methoxynaphthalin, Diphenyl, Inden, Pyren, Diphenylensulfid, Diphenylether, Stilben oder 9-(4-Butylbenzyl)anthracen.

$R^2$ in der Bedeutung eines substituierten Cyclopentadienyl- oder Indenyl-Anions kann insbesondere ein

durch $C_1$-$C_8$-Alkyl, $C_2$-$C_5$-Alkanoyl, $C_2$-$C_6$-Alkoxycarbonyl, Cyan oder Phenyl substituiertes Cyclopentadienyl- oder Indenyl-Anion sein. Beispiele hierfür sind die Anionen von Methyl-, Ethyl-, n-Propyl-, Isopropyl-, n-Butyl-, tert.Butyl-, n-Hexyl- oder n-Octylcyclopentadien, Methyl-, Ethyl-oder Isopropylinden, Dimethylcyclopentadien, Acetyl-, Propionyl-oder Butyrylcyclopentadien, Cyclopentadiencarbonsäure-methyl- oder -ethylester oder Cyaninden. Bevorzugt ist $R^2$ ein Cyclopentadienyl-oder ($C_1$-$C_4$-Alkyl)-cyclopentadienyl-Anion.

Das Anion $[X]^{a-}$ kann ein anorganisches oder organisches Anion sein, bevorzugt ist es das Anion einer Sulfonsäure. Beispiele sind die Anionen $F^-$, $Cl^-$, $Br^-$, $I^-$, $CN^-$, $NCO^-$, $NCS^-$, $CH_3COO^-$, $CF_3COO^-$, $SO_4^{2-}$, $PO_4^{3-}$, $NO_3^-$, $ClO_4^-$, $[(Phenyl)_4B]^-$, $C_6H_5SO_3^-$, $CH_3C_6H_4SO_3^-$, $CF_3C_6H_4SO_3^-$, $CH_3SO_3^-$, $CF_3SO_3^-$, $C_4F_9SO_3^-$, $C_8F_{17}SO_3^-$, $C_6F_5SO_3^-$, $BF_4^-$, $AlF_4^-$, $AlCl_4^-$, $TiF_6^{2-}$, $PF_6^-$, $SbF_6^-$, $SbCl_6^-$, $GeF_6^-$, $ZrF_6^{2-}$, $AsF_6^-$, $FeCl_4^-$, $SnF_6^-$, $SnCl_6^-$, $BiCl_6^-$.

Das Anion $[X]^{a-}$ ist bevorzugt ein einwertiges Anion, insbesondere eines aus der Reihe $BF_4^-$, $PF_6^-$, $SbF_6^-$, $AsF_6^-$, $CF_3COO^-$, $CH_3SO_3^-$, $CF_3SO_3^-$ oder $C_8F_{17}SO_3^-$.

Beispiele für Verbindungen, die erfindungsgemäss als latente Härtungskatalysatoren verwendet werden können, sind die folgenden:

($\eta^6$-Benzol)($\eta^5$-cyclopentadienyl)-eisen(II)-hexafluorphosphat
($\eta^6$-Toluol)($\eta^5$-indenyl)-eisen(II)-hexafluorphosphat
($\eta^6$-Toluol)($\eta^5$-cyclopentadienyl)-eisen(II)-tetrafluorborat
($\eta^6$-Toluol)($\eta^5$-cyclopentadienyl)-eisen(II)-hexafluorantimonat
($\eta^6$-Ethylbenzol)($\eta^5$-cyclopentadienyl)-eisen(II)-hexafluorantimonat
($\eta^6$-Cumol)($\eta^5$-cyclopentadienyl)-eisen(II)-hexafluorphosphat
($\eta^6$-Cumol)($\eta^5$-cyclopentadienyl)-eisen(II)-hexafluorantimonat
($\eta^6$-Cumol)($\eta^5$-methylcyclopentadienyl)-eisen(II)-hexafluorarsenat
($\eta^6$-Cumol)($\eta^5$-methylcyclopentadienyl)-eisen(II)-tetrafluorborat
($\eta^6$-Cumol)($\eta^5$-indenyl)-eisen(II)-tetrafluorborat
($\eta^6$-Xylol)($\eta^5$-cyclopentadienyl)-eisen(II)-perchlorat
($\eta^6$-Mesitylen)($\eta^5$-cyclopentadienyl)-eisen(II)-hexafluorphosphat
($\eta^6$-Methoxybenzol)($\eta^5$-cyclopentadienyl)-eisen(II)-hexafluorantimonat
($\eta^6$-Chlortoluol)($\eta^5$-cyclopentadienyl)-eisen(II)-hexafluorphosphat
($\eta^6$-Naphthalin)($\eta^5$-cyclopentadienyl)-eisen(II)-hexafluorphosphat
($\eta^6$-Naphthalin)($\eta^5$-cyclopentadienyl)-eisen(II)-hexafluorantimonat
($\eta^6$-1-Methylnaphthalin)($\eta^5$-cyclopentadienyl)-eisen(II)-hexafluorphosphat
($\eta^6$-2-Methylnaphthalin)($\eta^5$-cyclopentadienyl)-eisen(II)-hexafluorantimonat
($\eta^6$-1-Chlornaphthalin)($\eta^5$-cyclopentadienyl)-eisen(II)-hexafluorphosphat
($\eta^6$-2-Methoxynaphthalin)($\eta^5$-cyclopentadienyl)-eisen(II)-hexafluorantimonat
($\eta^6$-Diphenyl)($\eta^5$-cyclopentadienyl)-eisen(II)-hexafluorarsenat
($\eta^6$-Diphenylensulfid)($\eta^5$-cyclopentadienyl)-eisen(II)-hexafluorphosphat
($\eta^6$-Pyren)($\eta^5$-cyclopentadienyl)-eisen(II)-hexafluorphosphat
($\eta^6$-Anthracen)($\eta^5$-cyclopentadienyl)-eisen(II)-hexafluorphosphat
($\eta^6$-Perylen)($\eta^5$-methylcyclopentadien)-eisen(II)-hexafluorphosphat
($\eta^6$-Inden)($\eta^5$-indenyl)-eisen(II)-hexafluorphosphat
($\eta^6$-9,10-Dihydroanthracen)($\eta^5$-cyclopentadienyl)-eisen(II)-hexafluorantimonat
($\eta^6$-Stilben)($\eta^5$-cyclopentadienyl)-eisen(II)-hexafluorphosphat
($\eta^6$-9-[4-Butylbenzyl]anthracen)($\eta^5$-cyclopentadienyl)-eisen(II)-hexafluorphosphat
($\eta^6$-Cumol)($\eta^5$-cyclopentadienyl)-eisen(II)-acetat
($\eta^6$-Cumol)($\eta^5$-cyclopentadienyl)-eisen(II)-trifluoracetat
($\eta^6$-Cumol)($\eta^5$-cyclopentadienyl)-eisen(II)-toluolsulfonat
($\eta^6$-Cumol)($\eta^5$-cyclopentadienyl)-eisen(II)-trifluormethansulfonat
($\eta^6$-Cumol)($\eta^5$-cyclopentadienyl)-eisen(II)-perfluoroctansulfonat
($\eta^6$-2-Methylnaphthalin)($\eta^5$-cyclopentadienyl)-eisen(II)-hexafluorphosphat
($\eta^6$-2-Methylnaphthalin)($\eta^5$-cyclopentadienyl)-eisen(II)-trifluormethansulfonat
($\eta^6$-2-Methylnaphthalin)($\eta^5$-cyclopentadienyl)-eisen(II)-perfluoroctansulfonat

Die Verbindungen der Formel I sind bekannte Verbindungen oder können in Analogie zu bekannten Verbindungen hergestellt werden. So werden z.B. in der EP-A-94915 und EP-A-109851 eine Reihe solcher Verbindungen und ihre Herstellung beschrieben. Dort ist auch die Verwendung dieser Verbindungen als latente Härtungskatalysatoren für kationisch polymerisierbare Materialien, insbesondere für Epoxidharze beschrieben.

Da eine kationische Polymerisation nach einem anderen Reaktionsmechanismus verläuft als die

Reaktion von Isocyanaten mit Hydroxylverbindungen, war es überraschend, dass die Verbindungen der Formel I auch latente Härtungskatalysatoren für die Bildung von Polyurethanen sind. Es ist bekannt, dass typische Polyurethan-Katalysatoren, wie z.B. tertiäre Amine oder Organozinnsalze, für die Härtung kationisch polymerisierbarer Verbindungen nicht brauchbar sind und umgekehrt sind typische kationische Polymerisationskatalysatoren, wie z.B. $BF_3$, $AlCl_3$ oder starke Protonensäuren, nicht verwendbar als Polyurethan-Katalysatoren.

Die Wirksamkeit der beschriebenen Katalystoren kann durch Zusatz bestimmter Sensibilisatoren gesteigert werden, wie das in der EP-A-152 377 beschrieben ist. Es handelt sich dabei um Verbindungen mit einer Triplett-Energie von mindestens 30 kcal/Mol. Beispiele hierfür sind Verbindungen aus der Klasse der Thioxanthone, Phthalimide, Cumarine und der polycyclischen aromatischen Verbindungen. Bevorzugt eignen sich Thioxanthon, Anthracen und deren Derivate.

Die erfindungsgemäss katalytisch härtbaren Polyurethanlacke sind 2-Komponentensysteme aus Polyhydroxyl- und Polyisocyanat-Komponenten. Als Polyhydroxylkomponente werden ausser den allgemein üblichen Polyesterpolyolen und Polyetherpolyolen vielfach auch hydroxylgruppenhaltige Polyacrylate verwendet. Diese sind meistens Copolymerisate von Hydroxylalkyl-acrylaten mit Alkylacrylaten oder anderen ethylenisch ungesättigten Comonomeren. Eine weitere speziell für PUR-Lacke verwendete Klasse von Polyolen sind hydroxylgruppenhaltige Epoxidharze und deren Abwandlungsprodukte, wie z.B. deren Additionsprodukte mit Glykolen oder Hydroxyalkylaminen.

Als Polyisocyanate werden für Polyurethanlacke einerseits die üblichen niedermolekularen Di- und Triisocyanate verwendet, vor allem aliphatische Diisocyanate. Andererseits verwendet man auch die Umsetzungsprodukte dieser Di- und Triisocyanate mit unterstöchiometrischen Mengen an Diolen und Triolen. Diese Produkte stellen oligomere Polyurethane mit endständigen Isocyanatgruppen dar. Statt der freien Isocyanate können auch blockierte Isocyanate eingesetzt werden. Durch entsprechende Auswahl der Hydroxyl- und Isocyanat-Komponenten besteht die Möglichkeit, die Eigenschaften der Polyurethanlacke entsprechend abzuwandeln. Die technischen Details hierzu sind dem Lack-Fachmann bekannt und finden sich in Handbüchern, wie z.B. in H. Kittel, Lehrbuch der Lacke und Beschichtungen, Band I, Teil 2, Seiten 512-612 (Verlag Colomb, Berlin, 1973).

Die Lacke können mit oder ohne Lösungsmittel appliziert werden. Für industrielle Lackierungen werden sie oft mit wenig Lösungsmittel als sogenannte "high-solids" verwendet. Die Applikation kann nach üblichen Methoden geschehen, beispielsweise durch Streichen, Sprühen, Tauchen, Rollen, elektrostatisches Sprühen oder elektrophoretische, insbesondere kataphoretische Abscheidung. Ein Beispiel für die lösungsmittelfreie Applikation sind die Polyurethan-Pulverlacke, die meist elektrostatisch auf das Substrat appliziert werden.

Als Substrate kommen alle festen Materialien in Frage, wie z.B. Metalle, keramische Massen, Kunststoffe, Holz, Papier oder Textilien. Von besonderer Bedeutung in der industriellen Lackierung ist die Lackierung von Metallgegenständen, wie z.B. von Fahrzeugen, Maschinen, Apparaturen und deren Bestandteilen. Der Auftrag kann dabei im Einschicht- oder Zweischichtverfahren geschehen.

Je nach Applikationsart und Anwendungszweck werden den Lacken weitere Zusatzstoffe beigemischt. Dies sind vor allem Pigmente, Farbstoffe und Füllstoffe, aber auch Hilfsmittel wie Verlaufhilfsmittel, Thixotropiemittel, Flammschutzmittel, Antistatika, Lichtschutzmittel, Antioxidantien oder Metalldesaktivatoren. Von besonderer Bedeutung ist der Zusatz eines Lichtschutzmittels aus der Reihe der sterisch gehinderten Amine.

Die Verbindungen der Formel I können in der Hydroxylkomponente vorgelöst werden. Man kann sie aber auch in einem indifferenten organischen Lösungsmittel vorlösen, wie z.B. in Estern, Ethern, Ketonen oder aromatischen Kohlenwasserstoffen, und diese Lösungen der Hydroxylkomponente zumischen.

Die Erfindung betrifft daher auch zur Herstellung von Polyurethanlacken geeignete Polyhydroxylverbindungen oder Gemische von Hydroxylverbindungen, die als latenten Härtungskatalysator für den Polyurethanlack eine Verbindung der Formel I sowie gegebenenfalls ein oder mehrere organische Lösungsmittel enthalten.

Die Menge des verwendeten Katalysators richtet sich nach der gewünschten Härtungsgeschwindigkeit, im allgemeinen werden Mengen im Bereich von 0,01 bis 10 Gew.-%, vorzugsweise 0,05 bis 2 Gew.-%, bezogen auf die Hydroxylkomponente, benötigt.

Der Katalysator kann auch nach dem Vermischen von Hydroxyl- und Isocyanatkomponente zugesetzt werden. Auch in diesem Fall empfiehlt es sich, den Katalysator in einem indifferenten Lösungsmittel vorzulösen.

Die so erhaltene Mischung aller drei Komponenten und möglicher sonstiger Zusatzstoffe hat bei Raumtemperatur im Dunkeln oder bei Rotlicht eine Topfzeit von mehreren Stunden, während die Topfzeiten bei Verwendung konventioneller Härtungskatalysatoren unter einer Stunde liegen.

Die erfindungsgemäß hergestellten Lacke enthalten vorzugsweise 0,01 bis 5 Gew.-%, Katalysator,

bezogen auf den Feststoffgehalt des Lackes.

Der Lack kann unmittelbar vor der Applikation oder nach der Applikation bestrahlt werden. Falls ein Lösungsmittel verwendet wurde, kann dieses vor oder nach der Bestrahlung entfernt werden. Zur Bestrahlung werden vcr allem die in der UV-Technologie üblichen Bestrahlungsapparaturen verwendet. Meist wird darin das Werkstück unter einer oder mehreren Lichtquellen vorbeitransportiert. Der Lack kann aber auch in der Zuleitung zur Auftragsvorrichtung bestrahlt werden. Als Lichtquellen eignen sich beispielsweise Xenonlampen, Argonlampen, Wolframlampen, Kohlelichtbogenlampen, Metallhalogenidlampen oder Metall-Lichtbogenlampen, wie z.B. Quecksilberniederdruck-, -mitteldruck- oder -hochdrucklampen. Das Licht dieser Lampen ist reich an aktinischem Licht, das eine Wellenlänge von 200-600 nm hat. Die Bestrahlungszeiten liegen zwischen einer Sekunde und einer Minute, vorzugsweise bei 5-20 Sekunden. Auch Laserstrahlung, wie z.B. Argonionenlaserstrahlung, eignet sich zur Härtung der Lacke.

Durch die Bestrahlung wird der latente Härtungskatalysator in seine aktive Form umgewandelt. Die aktive Form beschleunigt die Reaktion zwischen OH- und NCO-Gruppen. Die sich dabei abspielenden chemischen Prozesse sind noch nicht genau bekannt. Eine weitere Beschleunigung der Lackhärtung kann durch anschliessendes Erwärmen des lackierten Gegenstandes bewirkt werden. Bevorzugt wird der Lack nach der Bestrahlung auf 50-150 °C erwärmt. Hierzu können die in der Lacktechnologie gebräuchlichen Verfahren und Geräte verwendet werden wie Infrarot-Bestrahlung, induktive Heizung, insbesondere aber die Heissluft- und Ofenerwärmung. Der Vorteil der erfindungsgemäss katalysierten Lacke bei der Heisshärtung ist, dass man durch das Vorhandensein des Katalysators niedrigere Härtungstemperaturen benötigt. Dies ist nicht nur eine Energieersparnis, sondern erlaubt auch die rasche Härtung von temperaturempfindlichen Werkstücken. Bei Härtungszeiten von 20 bis 30 Minuten genügen Ofentemperaturen von etwa 60 °C.

Der Lack kann auch ohne Bestrahlung thermisch gehärtet werden, da die Aktivierung des Katalysators auch thermisch geschehen kann. Vorzugsweise arbeitet man jedoch mit Bestrahlung, da hierbei niedrigere Härtungstemperaturen erforderlich sind.

In den nachfolgenden Beispielen beziehen sich Prozent und Teile jeweils auf das Gewicht, sofern nichts anderes angegeben ist.

<u>Beispiel 1</u>

Ein festkörperreicher Polyurethanlack wird bereitet aus
55 Teilen einer 70%igen Xylol-Lösung eines hydroxylgruppenhaltigen Polyacrylatharzes (Desmophen® LS 2747, Bayer AG),
26 Teilen einer 90%igen Ethylglykolacetat-Lösung eines aliphatischen Polyisocyanates (Desmodur® N 3390, Bayer AG),
19 Teilen Ethylglykolacetat.

Der Lack hat einen Festkörpergehalt von 61 %.

Einzelne Portionen des Lackes werden mit den in Tabelle 1 angegebenen Mengen an Härtungskatalysatoren vermischt und mit einer Rakel auf Aluminiumbleche (0,5 mm) in einer Stärke von ca. 70 µm aufgetragen, was einer Trockenfilmstärke von ca. 40 µm entspricht.

Die Proben werden mit einer Fusionslampe, Typ D (120 W/cm), bei einer Bandgeschwindigkeit von 5 m/min zweimal durch das Bestrahlungsgerät transportiert.

Anschliessend werden die Proben in einem Umluftofen 20 Minuten auf 70 °C erwärmt. Nach 1 Stunde Lagerzeit wird die Pendelhärte der Lackfilme nach der Methode von Koenig (DIN 53 157) gemessen.

Als Vergleich wird eine Probe ohne Katalysator ohne Bestrahlung derselben Wärmehärtung unterworfen.

Zur Bestimmung der Lagerbeständigkeit (Topfzeit) wird die Viskosität der Lacke vor und nach einer dreistündigen Dunkellagerung bei Raumtemperatur mittels eines Kegel-Platte-Viskosimeters gemessen. Der relative Anstieg der Viskosität ist in der Tabelle 1 aufgeführt.

Tabelle 1

| Katalysatoren[1)] | Relativer Viskositätsanstieg in 3 h | Belichtung | Pendelhärte (Sekunden) |
|---|---|---|---|
| Keiner | 5-10 % | - | 11 |
| 0,05 % Kat. 1[2)] | 5-10 % | + | 43 |
| 0,1 % Kat. 1[2)] | 5-10 % | + | 40 |

1) Menge bezogen auf Feststoffgehalt des Lackes

2) Kat. 1 = ($\eta^6$-Cumol)($\eta^5$-cyclopentadienyl)-eisen(II)-hexafluorphosphat

Beispiel 2

Es wird eine Mischung bereitet aus
46,7 g einer 65%igen Lösung eines verzweigten hydroxylgruppenhaltigen Polyesters in Ethylglykolacetat (Desmophen® 650, Bayer AG) und
53,3 g einer 75%igen Lösung eines verkappten aliphatischen Polyisocyanates in Ethylglykolacetat (Desmodur® KL 5-2540, Bayer AG).

Diese Mischung wird verdünnt mit 10 g eines Gemisches aus gleichen Teilen Xylol, Butylacetat und Ethylglykolacetat, in dem vorher der Katalysator gelöst wurde.

Als Katalysator werden verwendet:
Kat. 1 = ($\eta^6$-Cumol)($\eta^5$-cyclopentadienyl)-eisen(II)-hexafluorphosphat
Kat. 2 = ($\eta^6$-Cumol)($\eta^5$-cyclopentadienyl)-eisen(II)-trifluoracetat

Der Lack wird in einer Dicke von 150 µm auf ein dünnes Aluminiumblech aufgetragen und in einem PPG-Bestrahlungsgerät mit 2 Lampen à 80 W bestrahlt. Anschliessend werden die Proben 30 Minuten bei 110 oder 130°C im Umluftofen gehärtet. 30 Minuten nach der Härtung wird die Pendelhärte der Proben nach der Methode von Koenig (DIN 53157) gemessen.

Die Ergebnisse sind in den Tabellen 2 und 3 zusammengestellt.

Tabelle 2 - Härtung bei 110°C / 30 min

| Katalysator | Belichtungszeit | Pendelhärte (s) |
|---|---|---|
| 1 % Kat. 1 | - | 78 |
| | 2,1 s | 95 |
| | 8,4 s | 97 |
| | 12,6 s | 104 |
| 1 % Kat. 2 | - | 83 |
| | 2,1 s | 95 |
| | 8,4 s | 94 |
| | 12,6 s | 99 |
| 4 % Kat. 2 | - | 77 |
| | 2,1 s | 99 |
| | 8,4 s | 126 |
| | 12,6 s | 137 |
| ohne Kat. | - | 70 |

Tabelle 3 - Härtung bei 130°C / 30 min

| Katalysator | Belichtungszeit | Pendelhärte (s) |
|---|---|---|
| 1 % Kat. 1 | - | 206 |
| | 2,1 s | 211 |
| | 8,4 s | 211 |
| | 12,6 s | 213 |
| 1 % Kat. 2 | - | 203 |
| | 2,1 s | 210 |
| | 8,4 s | 216 |
| | 12,6 s | 218 |
| 4 % Kat. 2 | - | 196 |
| | 2,1 s | 207 |
| | 8,4 s | 213 |
| | 12,6 s | 211 |
| ohne Kat. | - | 91 |

Man ersieht daraus, dass bei höheren Härtungstemperaturen auch ohne Belichtung befriedigende Resultate erhalten werden.

## Patentansprüche

1. Verfahren zur Härtung von Polyurethanlacken, die mindestens eine Polyhydroxylverbindung und mindestens ein Polyisocyanat oder ein blockiertes Polyisocyanat enthalten, dadurch gekennzeichnet, dass man dem Lack vor der Applikation als latenten Härtungskatalysator eine Verbindung der Formel I zusetzt,

$$\left[ (R^1)\ Fe^{II}(R^2) \right]^+_a \quad [X]^{a-} \qquad I$$

worin a 1, 2 oder 3 ist, $R^1$ ein ungeladener carbocyclischer oder heterocyclischer, unsubstituierter oder substituierter aromatischer Ring ist, $R^2$ ein unsubstituiertes oder substituiertes Cyclopentadienyl- oder Indenyl-Anion ist und $[X]^{a-}$ ein a-wertiges Anion ist, und den Lack nach der Applikation erwärmt oder mit aktinischem Licht bestrahlt und anschliessend erwärmt.

2. Verfahren gemäss Anspruch 1, dadurch gekennzeichnet, dass man den Lack mit aktinischem Licht bestrahlt und nach der Bestrahlung auf 50-150° C erwärmt.

3. Verfahren gemäss Anspruch 1, dadurch gekennzeichnet, dass man als Katalysator eine Verbindung der Formel I verwendet, worin $R^1$ Benzol, Toluol, Xylol, Cumol, Methoxybenzol, Chlorbenzol, 4-Chlortoluol,

Naphthalin, Methylnaphthalin, Chornaphthalin, Methoxynaphthalin, Diphenyl, Inden, Pyren, Diphenylensulfid, Diphenylether, Stilben oder 9-(4-Butylbenzyl)anthracen ist.

4. Verfahren gemäss Anspruch 1, dadurch gekennzeichnet, dass man als Katalysator eine Verbindung der Formel I verwendet, worin $R^2$ ein Cyclopentadienyl- oder ($C_1$-$C_4$-Alkyl)-cyclopentadienyl-Anion ist.

5. Verfahren gemäss Anspruch 1, dadurch gekennzeichnet, dass man als Katalysator eine Verbindung der Formel I verwendet, worin $[X]^{a-}$ das Anion einer Sulfonsäure ist.

6. Verfahren gemäss Anspruch 1, dadurch gekennzeichnet, dass man als Katalysator eine Verbindung der Formel I verwendet, worin $[X]^{a-}$ einer der folgenden Anionen ist: $F^-$, $Cl^-$, $Br^-$, $I^-$, $CN^-$, $NCO^-$, $NCS^-$, $CH_3COO^-$, $CF_3COO^-$, $SO_4^{2-}$, $PO_4^{3-}$, $NO_3^-$, $ClO_4^-$, $[(Phenyl)_4B]^-$,$C_6H_5SO_3^-$, $CH_3C_6H_4SO_3^-$, $CF_3C_6H_4SO_3^-$, $CH_3SO_3^-$, $CF_3SO_3^-$, $C_4F_9SO_3^-$, $C_8F_{17}SO_3^-$, $C_6F_5SO_3^-$, $BF_4^-$, $AlF_4^-$, $AlCl_4^-$, $TiF_6^{2-}$, $PF_6^-$, $SbF_6^-$, $SbCl_6^-$, $GeF_6^-$, $ZrF_6^{2-}$, $AsF_6^-$, $FeCl_4^-$, $SnF_6^-$, $SnCl_6^-$, $BiCl_6^-$.

7. Verfahren gemäss Anspruch 6, dadurch gekennzeichnet, dass man als Katalysator eine Verbindung der Formel I verwendet, worin a = 1 und $X^-$ ein Anion aus der Reihe $BF_4^-$, $PF_6^-$, $SbF_6^-$, $AsF_6^-$, $CF_3COO^-$ oder $C_8F_{17}SO_3^-$ ist.

8. Verfahren gemäss Anspruch 1, wobei als Katalysator das Hexafluorphosphat, das Hexafluorantimonat, das Trifluormethansulfonat oder das Heptadecafluoroctansulfonat des ($\eta^6$-Cumol)($\eta^5$-cyclopentadienyl)-eisen(II) oder des ($\eta^6$-2-Methylnaphthalin)($\eta^5$-cyclopentadienyl)-eisen(II) verwendet wird.

9. Verfahren gemäss Anspruch 2, dadurch gekennzeichnet, dass man zur Bestrahlung Licht von der Wellenlänge 200-600 nm verwendet.

10. Verfahren nach Anspruch 1, dadurch gekennzeichnet, dass man dem Lack zusätzlich als Sensibilisator eine Verbindung mit einer Triplettenergie von mindestens 30 kcal/Mol zusetzt.

11. Verfahren gemäss Anspruch 10, dadurch gekennzeichnet, dass man als Sensibilisator eine Verbindung aus der Klasse der Thioxanthone, Phthalimide, Cumarine oder der polycyclischen aromatischen Verbindungen zusetzt.

12. Zur Herstellung von Polyurethanlacken geeignete Polyhydroxylverbindung oder Gemisch von Polyhydroxylverbindungen, enthaltend als latenten Härtungskatalysator für den Polyurethanlack eine Verbindung der Formel I gemäss Anspruch 1, sowie gegebenenfalls ein oder mehrere organische Lösungsmittel.

13. Polyhydroxylverbindung(en) gemäss Anspruch 12, enthaltend 0,01 bis 10 Gew.-%, bezogen auf die Polyhydroxylverbindung(en), des latenten Härtungskatalysators.

## Claims

1. A process for curing polyurethane coatings containing at least one polyhydroxy compound and at least one polyisocyanate or a masked polyisocyanate, which comprises adding a compound of the formula I

$$\left[ (R^1)\ Fe^{II}(R^2) \right]_a^+ \quad [X]^{a-} \qquad \mathrm{I}$$

in which a is 1, 2 or 3, $R^1$ is an uncharged carbocyclic or heterocyclic, unsubstituted or substituted aromatic ring,
$R^2$ is an unsubstituted or substituted cyclopentadienyl or indenyl anion and $[X]^{a-}$ is an a-valent anion, to the coating as a latent curing catalyst before application, and heating the coating after application or irradiating it with actinic light and then heating it.

2. A process according to claim 1, wherein the coating is irradiated with actinic light and is heated to 50-150 °C after being irradiated.

3. A process according to claim 1, wherein the catalyst used is a compound of the formula I in which $R^1$ is benzene, toluene, xylene, cumene, methoxybenzene, chlorobenzene, 4-chlorotoluene, naphthalene, methylnaphthalene, chloronaphthalene, methoxynaphthalene, biphenyl, indene, pyrene, diphenylene sulfide, diphenyl ether, stilbene or 9-(4-butylbenzyl)-anthracene.

4. A process according to claim 1, wherein the catalyst used is a compound of the formula I in which $R^2$ is a cyclopentadienyl or ($C_1$-$C_4$-alkyl)-cyclopentadienyl anion.

5. A process according to claim 1, wherein the catalyst used is a compound of the formula I in which $[X]^{a-}$ is the anion of a sulfonic acid.

6. A process according to claim 1, wherein the catalyst used is a compound of the formula I in which $[X]^{a-}$ is one of the following anions: $F^-$, $Cl^-$, $Br^-$, $I^-$, $CN^-$, $NCO^-$, $NCS^-$, $CH_3COO^-$, $CF_3COO^-$, $SO_4^{2-}$, $PO_4^{3-}$, $NO_3^-$, $ClO_4^-$, $[(phenyl)_4B]^-$, $C_6H_5SO_3^-$, $CH_3C_6H_4SO_3^-$, $CF_3C_6H_4SO_3^-$ $CH_3SO_3^-$, $CF_3SO_3^-$, $C_4F_9SO_3^-$, $C_8F_{17}SO_3^-$, $C_6F_5SO_3^-$, $BF_4^-$, $AlF_4^-$, $AlCl_4^-$, $TiF_6^{2-}$, $PF_6^-$, $SbF_6^-$, $SbCl_6^-$, $GeF_6^-$, $ZrF_6^{2-}$, $AsF_6^-$, $FeCl_4^-$, $SnF_6^-$, $SnCl_6^-$ or $BiCl_6^-$.

7. A process according to claim 1, wherein the catalyst used is a compound of the formula I in which a is 1 and $X^-$ is an anion belonging to the series comprising $BF_4^-$, $PF_6^-$, $SbF_6^-$, $AsF_6^-$, $CF_3COO^-$ or $C_8F_{17}SO_3^-$.

8. A process according to claim 1, wherein the catalyst used is the hexafluorophosphate, hexafluoroantimonate, trifluoromethanesulfonate or heptadecafluorooctanesulfonate of ($\eta^6$-cumene) ($\eta^5$-cyclopentadienyl)-iron(II) or of ($\eta^6$-2-methylnaphthalene) ($\eta^5$-cyclopentadienyl)-iron(II).

9. A process according to claim 2, wherein light of wavelength 200-600 nm is used for irradiation.

10. A process according to claim 1, wherein a compound having a triplet energy of at least 30 kcal/mol is added to the coating, in addition, as a sensitizer.

11. A process according to claim 10, wherein a compound belonging to the class comprising the thioxanthones, phthalimides, coumarins or polycyclic aromatic compounds is added as the sensitizer.

12. A polyhydroxy compound or mixture of polyhydroxy compounds suitable for the preparation of polyurethane coatings and containing, as the latent curing catalyst for the polyurethane coating, a compound of the formula I according to claim 1, and, if appropriate, one or more organic solvents.

13. A polyhydroxy compound or compounds according to claim 12, containing 0.01 to 10% by weight, relative to the polyhydroxy compound(s), of the latent curing catalyst.

**Revendications**

1. Procédé de durcissement de vernis et peintures de polyuréthanes formés d'un ou de plusieurs composés polyhydroxyliques et d'un ou plusieurs polyisocyanates ou polyisocyanates bloqués, procédé caractérisé en ce que, avant d'appliquer le vernis, on lui ajoute comme catalyseur de durcissement latent un composé de formule I ci-dessous

$$\left[ (R^1)\, Fe^{II} (R^2) \right]^+_a \quad [X]^{a-} \qquad \text{I}$$

dans laquelle a est le nombre 1, 2 ou 3, $R^1$ est un cycle aromatique carbocyclique ou hétérocyclique non chargé, avec ou sans substituants, $R^2$ un anion cyclopentadiényle ou indényle avec ou sans substituants et $[X]^{a-}$ un anion de valence a, et après avoir appliqué le vernis on le chauffe ou bien on le soumet à un rayonnement actinique puis à un chauffage.

**2.** Procédé selon la revendication 1, caractérisé en ce que l'on soumet le vernis à un rayonnement actinique puis on le chauffe entre 50 et 150 °C.

**3.** Procédé selon la revendication 1, caractérisé en ce que le catalyseur est un composé de formule I dans lequel $R^1$ est un radical de benzène, toluène, xylène, cumène, méthoxybenzène, chlorobenzène, 4-chlorotoluène, naphtalène, méthylnaphtalène, chloronaphtalène, méthoxynaphtalène, biphényle, indène, pyrène, sulfure de diphénylène, éther diphénylique, stilbène ou 9-(4-butylbenzyl)anthracène.

**4.** Procédé selon la revendication 1, caractérisé en ce que le catalyseur est un composé de formule I dans lequel $R^2$ est un anion cyclopentadiényle ou ($C_1$-$C_4$-alkyl)-cyclopentadiényle.

**5.** Procédé selon la revendication 1, caractérisé en ce que le catalyseur est un composé de formule I dans lequel $[X]^{a-}$ est l'anion d'un acide sulfonique.

**6.** Procédé selon la revendication 1, caractérisé en ce que le catalyseur est un composé de formule I dans lequel $[X]^{a-}$ est l'un des anions suivants : $F^-$, $Cl^-$, $Br^-$, $I^-$, $CN^-$, $NCO^-$, $NCS^-$, $CH_3COO^-$, $CF_3COO^-$, $SO_4{}^{2-}$, $PO_4{}^{3-}$, $NO_3{}^-$, $ClO_4{}^-$, $[(\text{phényle})_4B]^-$, $C_6H_5SO_3{}^-$, $CH_3C_6H_4SO_3{}^-$, $CF_3C_6H_4SO_3{}^-$, $CH_3SO_3{}^-$, $CF_3SO_3{}^-$, $C_4F_9SO_3{}^-$, $C_8F_{17}SO_3{}^-$, $C_6F_5SO_3{}^-$, $BF_4{}^-$, $AlF_4{}^-$, $AlCl_4{}^-$, $TiF_6{}^{2-}$, $PF_6{}^-$, $SbF_6{}^-$, $SbCl_6{}^-$, $GeF_6{}^-$, $ZrF_6{}^{2-}$, $AsF_6{}^-$, $FeCl_4{}^-$, $SnF_6{}^-$, $SnCl_6{}^-$ et $BiCl_6{}^-$.

**7.** Procédé selon la revendication 6, caractérisé en ce que le catalyseur est un composé de formule I dans lequel a = 1 et $X^-$ est l'un des anions suivants : $BF_4{}^-$, $PF_6{}^-$, $SbF_6{}^-$, $AsF_6{}^-$, $CF_3COO^-$ et $C_8F_{17}SO_3{}^-$.

**8.** Procédé selon la revendication 1, caractérisé en ce que l'on emploie comme catalyseur l'hexachlorophosphate, l'hexafluoroantimonate, le trifluorométhane-sulfonate ou l'heptadécafluorooctane-sulfonate du ($\eta^6$-cumène) ($\eta^5$-cyclopentadiényl)-fer(II) ou du ($\eta^6$-2-méthylnaphtalène) ($\eta^5$-cyclopenta-diényl)-fer (II).

**9.** Procédé selon la revendication 2, caractérisé en ce que l'on effectue l'irradiation par un rayonnement de longueur d'onde de 200 à 600 nm.

**10.** Procédé selon la revendication 1, caractérisé en ce que l'on ajoute également au vernis comme sensibilisant un composé ayant une énergie de triplets d'au moins 30 kcal/mol.

**11.** Procédé selon la revendication 10, caractérisé en ce que l'on ajoute comme sensibilisant un composé de la catégorie des thioxanthones, phtalimides, coumarines et composés aromatiques polycycliques.

**12.** Composé polyhydroxylique ou mélange de composés polyhydroxyliques servant à préparer des vernis et peintures de polyuréthanes, qui contiennent comme catalyseur de durcissement latent de ces vernis et peintures un composé de formule I selon la revendication 1, avec éventuellement un ou plusieurs solvants organiques.

**13.** Composé ou composés polyhydroxyliques de la revendication 12 qui contiennent de 0,01 à 10 % de leur poids du catalyseur de durcissement latent.